# EUROPEAN PATENT SPECIFICATION

(11) **EP 4 568 930 B1**
(45) Date of publication and mention of the grant of the patent: **11.03.2026**
(21) Application number: 23750774.4
(22) Date of filing: 25.07.2023
(51) Int. Cl.: C02F 1/467, C02F 1/461, C02F 1/00

(54) **A METHOD AND DEVICE FOR DISINFECTING WATER AND WATER SUPPLY SYSTEM COMPRISING SAID DEVICE**
VERFAHREN UND VORRICHTUNG ZUR DESINFEKTION VON WASSER UND WASSERVERSORGUNGSSYSTEM UMFASSEND DIE GENANNTE VORRICHTUNG
PROCÉDÉ ET DISPOSITIF DE DÉSINFECTION DE L'EAU ET SYSTÈME D'ALIMENTATION EN EAU COMPRENANT LEDIT DISPOSITIF

(30) Priority: 08.08.2022 NL 2032699
(43) Date of publication of application: 18.06.2025
(73) Proprietor: SENSIBLUE IP B.V., 2525 KD The Hague (NL)
(72) Inventor: THOLEN, Johannes Petrus Paulus, 1405 GX Bussum (NL); THOLEN, Wirijn Jan, 2245 VN Wassenaar (NL)
(74) Representative: van Dam, Vincent
(86) International application number: PCT/NL2023/050397
(87) International publication number: WO 2024/035258

(56) References cited:
- CN-A- 102 115 232
- US-A- 5 985 108
- US-A1- 2018 297 862

## Description

The present invention relates to a method for disinfecting water in a water supply system by means of generation of active chlorine using an electrolytic device comprising an electrolytic cell provided with electrodes over which a voltage difference is applied. The invention also relates to an electrolytic device for disinfecting water in a water supply system by means of generation of active chlorine. The invention also relates to a water supply system comprising said electrolytic device.

Electrolysis is a technique that uses direct electric current (DC) to drive an otherwise non-spontaneous chemical reaction. The use of electrolysis for disinfecting water is known. Usually sodium chloride (NaCl) is electrochemically converted to produce chlorine. The salt dissolves in water under forming of Na⁺- and Cl⁻-ions. When said solution is guided through an electrolytic cell, while a voltage is applied over the electrodes of said cell, chlorine (Cl₂), oxygen and hydrogen ions are formed at the anode and hydrogen and hydroxyl ions are formed at the cathode.

The chlorine formed at the anode may, depending on the pH, also be present as hypochlorous acid (HClO) or as a hypochlorite (ClO⁻). Dissolved chlorine, hypochlorous acid and hypochlorite are called "free chlorine" or "free active chlorine" or "active chlorine". When using (common) tap water having a pH of about 7 to 8 and containing a small concentration of NaCl, sodium hypochlorite will be formed. The quantity of free chlorine to be formed will depend on the wanted concentration and the quantity of water to be treated.

US 2018/297862 A1 discloses a method for water treatment and a corresponding system to be installed in-line as part of a water distribution system for swimming pools and hot tubs.

CN 102 115 232 A discloses a similar system comprising an AC current generator and a rectifier.

US 5 985 108 A discloses a controlling apparatus which can control an electrolytic ion water producing apparatus.

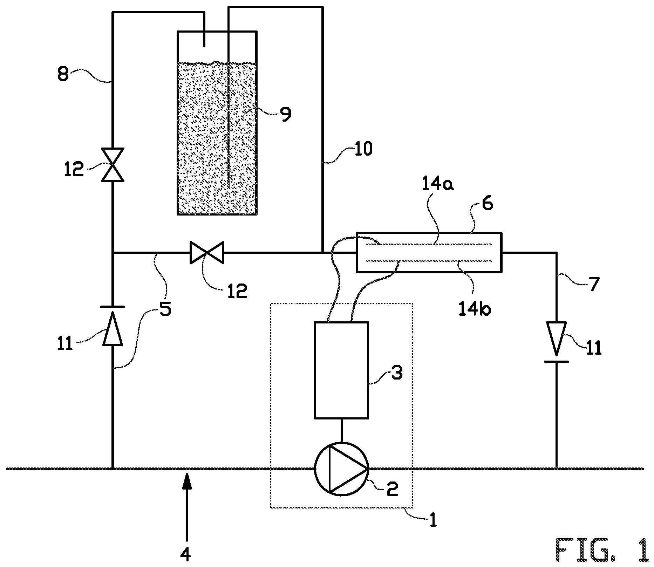

An example of an electrolytic device is disclosed in EP 1 461 291 B1 of the present inventor, which discloses an electrolytic device as shown in Fig.1. Said device comprises an electrolytic cell 6 provided with electrodes 14a, 14b over which a voltage difference is applied, and also comprises provided in a main pipe 4 a generator 1 for supplying the voltage difference for the electrolytic cell, which generator comprises a blade wheel 2 driven by the water in the water supply system and a direct current (DC) generator 3. The device further comprises a supply pipe 5 for the electrolytic cell that is connected to the water supply system and which guides a part of the water flow in the water supply system to the electrolytic cell, a discharge pipe 7 for the electrolytic cell that is connected to the water supply system downstream of the location where the supply pipe for the electrolytic cell is connected to the water supply system and which discharges the water treated in the electrolytic cell to the water supply system, a salt dosing device 9 containing a compound capable of supplying chloride ions, a supply pipe 8 for the salt dosing device which is connected to the supply pipe 5 for the electrolytic cell and which supplies at least a part of the water in the supply pipe 5 for the electrolytic cell to the salt dosing device 9 for supplying chloride ions to the water to be treated in the electrolytic cell 6, a discharge pipe 10 for the salt dosing device 9 which is connected to the supply pipe 5 for the electrolytic cell downstream of the location where the supply pipe 8 for the salt dosing device is connected and which guides the water containing chloride-ions from the salt dosing device 9 to the supply pipe 5 for the electrolytic cell, and means for regulating the ratios of the water flow in the water supply system, the feeding for the electrolytic cell and the feeding for the salt dosing device comprising constrictions and/or regulating valves (11, 12) accommodated in the water supply system between the location where the supply pipe 5 for the electrolytic cell is connected to the water supply system and the location where the discharge pipe 7 for the electrolytic cell is connected to the water supply system, the supply pipe 5 for the electrolytic cell, the discharge pipe 7 for the electrolytic cell, the supply pipe 8 for the salt dosing device and/or the discharge pipe 9 for the salt dosing device, and/or the blade wheel 2 of the generator 1 being accommodated in the water supply system downstream of the location where the supply pipe 5 for the electrolytic cell is connected to the water supply system and upstream of the location where the discharge pipe 7 of the electrolytic cell is connected to the water supply system.

Although the electrolytic device of EP 1 461 291 B1 functions well, the inventor has found that there is still room for improvement, in particular with regard to regulation of energy input and related thereto, efficiency in energy use.

### Description of the invention

In a first aspect the invention relates to a method for disinfecting water in a water supply system by means of generation of active chlorine using an electrolytic device comprising an electrolytic cell provided with electrodes over which a voltage difference is applied, wherein the method comprises: supplying said voltage difference for said electrolytic cell using an alternating current (AC) generator, wherein said AC generator uses water streaming through the water supply system to generate alternating current with an alternating current frequency proportional to the flow rate of the water in the water supply system; and converting the generated AC to direct current (DC) using a converter, as to generate a direct current and said voltage difference over said electrodes, wherein said converter is controlled to supply the required voltage difference and direct current for electrolytic generation of active chlorine on the basis on said AC frequency, wherein controlling said converter to supply the direct current for generating the required voltage difference for electrolytic generation of active chlorine on the basis of said AC frequency comprises
predetermining a correlation of flow rates with respective generated AC frequencies;
predetermining a correlation of said AC frequencies with respective direct current and voltage difference values required for electrolytic generation of active chlorine; and
using these correlations to control said converter such that the required voltage difference and direct current for electrolytic generation of active chlorine is applied in the electrolytic cell.

In a second aspect the invention relates to an electrolytic device for disinfecting water in a water supply system by means of generation of active chlorine, comprising: an electrolytic cell provided with electrodes over which a voltage difference can be applied; an alternating current (AC) generator, configured to use water streaming through the water supply system to generate alternating current with an alternating current frequency proportional to the flow rate of the water in the water supply system; a converter configured to convert the generated alternating current to direct current (DC) for applying said voltage difference over the electrodes of the electrolytic cell; and a control device configured to control said converter to supply the DC for generating the required voltage difference for electrolytic generation of active chlorine on the basis of said alternating current frequency, wherein said control device is programmed to
use a predetermined correlation between alternating current frequencies generated by said AC generator with respective direct current and voltage difference values required for electrolytic generation of active chlorine to control said converter such that the required voltage difference for electrolytic generation of active chlorine is applied over said electrodes.

In a third aspect the invention relates to a water supply system comprising the electrolytic device according to the second aspect.

The inventor has found that using an AC generator in accordance with the invention allows for generation of the electrical energy required for electrolysis, while at the same time the frequency of the AC generated by the generator can be used to control the required energy input for effective generation of active chlorine. In other words, the amount of active chlorine generated in a given time is based on the AC frequency. Herein, a specific AC frequency can be coupled to generating a specific predetermined amount of active chlorine. In other words, a predetermined amount of active chlorine can be generated in a given time on the basis of a predetermined AC frequency. In line with this, the electrolytic cell can be configured to generate a predetermined amount of active chlorine in a given time on the basis of a predetermined AC frequency (using the input of the control device). Herein, the predetermination of said specific amount of generated chlorine is aimed to define the amount of chlorine necessary to purify an amount of water of a given initial quality to a desired quality in a given time, keeping up with the flow rate of the water in the water supply system.

This is because the AC generator is driven by the flow of water in the water supply system, for instance by using a blade wheel driven by the water in the water supply system, so that the AC frequency is proportional to the flow rate of the water in the water supply system. Accordingly, the AC frequency can be used as a measure for the amount of water that needs to be disinfected in the electrolytic cell, for instance a membrane electrolytic cell. The amount of water led through the electrolytic cell in a given time frame is on its turn proportional for the required amount of chlorine required for disinfection. Further, the amount of chlorine generated in a given time, depends on the voltage difference between the electrodes and the current flowing between the electrodes. In other words, the more chlorine needs to be generated in a given time, the higher the voltage difference between the electrodes and the current flowing between the electrodes should be. In view of this proportional relationship between these parameters the inventor has considered that the AC frequency can be used in accordance with the invention as a measure to control the required energy input for effective generation of active chlorine, wherein a given frequency can be attributed to a required voltage difference between the electrodes and the current flowing between the electrodes. This is efficient with regard to energy use, but the invention herewith also provides a very reliable and efficient means to control the amount of chlorine to be generated, because both the provision of energy for electrolysis and the regulation thereof are physically linked to each other because they both require the AC generator as key component.

The present invention is very useful in purification of tap water or water of comparable quality to that of tap water, or in other words, water of relatively good quality. In this respect it is preferred that the water supply system in the context of the present invention is configured to supply tap water or water of quality comparable to that of tap water. Herein, the amount of required salt in the electrolysis cell and the voltage and current required for the process at a certain water flow and desired chlorine content can be effectively controlled on the basis of these parameters, thus rendering the present invention a simple and effective system for purification of water.

Further regarding the AC generator, in a preferred embodiment the AC generator is accommodated in the water supply system downstream of the location where a supply pipe for the electrolytic cell is connected to the water supply system, and upstream of the location where a discharge pipe of the electrolytic cell is connected to the water supply system, i.e. the electrolytic cell will then be located in a bypass of a main pipe. Due to this positioning of the AC generator a slight pressure drop will occur over the generator, as a result of which it will be possible to generate the water flow that will run through the electrolytic cell. Nonetheless it is possible to accommodate the generator elsewhere in the water supply system. However, measures will then have to be taken to ensure a sufficient flow through the electrolytic cell, for instance by providing a constriction or regulating valve in the main pipe.

Any electrolysis reaction requires a supply of electrical energy which means both a voltage and electric current are needed. In practice, a slightly larger voltage is required since the enthalpy (heating) of the products results in slightly lower efficiency which manifests as an overpotential. For production of active chlorine as in the present invention, a basic voltage difference is necessary to initiate the electrolysis process. Depending on the electrode material this may for instance be around 0,8 V. Once this critical voltage level is exceeded, the electrolysis reaction follows the law of Ohm and proceeds at a rate determined largely by the current. Basically, the higher the current, the more molecules will react (electrolyze) and the more products (active chlorine) will form per unit time. In view of this, it is to be understood the relation between the required voltage difference and the current over the electrolytic cell is not always linear.

The electrolysis device is calibrated so that controlling said converter to supply the DC for generating the required voltage difference for electrolytic generation of active chlorine on the basis of said AC frequency comprises predetermining a correlation of flow rates with respective generated AC frequencies; and predetermining a correlation of said AC frequencies with respective direct current and voltage difference values required for electrolytic generation of active chlorine; and using these correlations to control said converter such that the required voltage difference and direct current for electrolytic generation of active chlorine is applied in the electrolytic cell.

In a given water supply system the circumstances are relatively stable. That is, the same equipment, piping, valves and electrolytic cell are used for a longer period. Therefore, controlling the required voltage and current in the electrolytic cell can be performed in a relatively simple way by pre-programming the controller of the device. In light of this, in the device of the inventionthe control device is programmed to use a predetermined correlation between AC frequencies generated by said AC generator with respective DC and/or voltage difference values required for electrolytic generation of active chlorine to control said converter such that the required voltage difference for electrolytic generation of active chlorine is applied over said electrodes. As the device and method of the invention may in general be used for longer time in the same water supply system, this may suitably be realized by calibrating the controller to the specific AC generator and electrolytic cell, for instance by pre-programming the controller with the required parameters, such as AC-frequency and required DC current and voltage, and optionally also the flow rate through the water supply system. When the controller detects a certain AC frequency it can respond by causing the converter to generate a certain DC current, which on its turn is linked to a certain voltage to be established over the electrodes, which may be effected via the same controller or a separate one.

Despite the relatively stable circumstances in a given water supply system, deviations or undesired events may take place once in a while. For instance, in case of a suboptimal salt concentration the effected voltage difference over the electrodes may be much higher than expected on the basis of the predetermined correlations because in this case conductivity in the electrolytic cell is too low as a result of a too low amount of salt ions. Also defects in the generator may occur, resulting in a voltage over the electrodes that is too low. In view of such possible undesired events, the method according to the invention may comprise a warning system. For this purpose, the actual voltage difference over said electrodes can be determined and it can be monitored whether said actual voltage difference is in line with the expected voltage difference on the basis of the predetermined correlation of said AC frequencies to respective DC and voltage difference values. A warning signal may then be generated when said actual voltage difference is not in line with the voltage difference as expected based on the predetermined correlations. Such a system may be implemented in the device according to the invention by including a voltage meter configured for determining the actual voltage difference over said electrodes and a monitoring device for monitoring whether said actual voltage difference is in line with the expected voltage difference on the basis of the predetermined correlation of said AC frequencies to respective DC and voltage difference values; and a warning device configured to generate a warning signal based on input from said monitoring device when said actual voltage difference is not in line with the expected voltage difference. The warning system may for instance comprise a LED indicator configured to generate a warning signal.

The electronic circuitry is preferably implemented on one or more Printed Circuit Board (PCB). For instance, the controller and control device may be comprised on a PCB, optionally with further components. The use of PCBs allows compact designs. Depending on the specific wishes the device according to the invention may be equipped with suitable circuitry, sensors etc. based on common general knowledge in the field of electronics. The PCB may contain means to collect and store information regarding water flow, the amount of water treated, current, voltage, salt concentration and conversion etc., which can be monitored remotely using a wireless connection.

Any further equipment may be used in order to design the device according to the invention to the wishes of the user, such as, tubings, pipings, valves, a salt storage and/or a salt dosing device, etc.

In an exemplary embodiment the device may be designed to comprise in a main pipe an AC generator for supplying the voltage difference for the electrolytic cell, which generator comprises a blade wheel driven by the water in the water supply system. Such a generator is commonly referred to as a turbine generator. In a turbine generator, the flowing water pushes a series of blades mounted on a rotor shaft. The force of the water on the blades spins/rotates the rotor shaft of a generator. The generator, in turn, converts the mechanical (kinetic) energy of the rotor to electrical energy.

In accordance with the invention the (AC) generator is configured to use water streaming through the water supply system to generate AC with an AC frequency proportional to the flow rate of the water in the water supply system. The device also comprises a converter configured to convert the generated AC to direct current (DC) for applying said voltage over the electrodes of the electrolytic cell and a control device configured to control said converter to supply the DC for generating the required voltage difference for electrolytic generation of active chlorine on the basis of said AC frequency. The device may further comprise a supply pipe for the electrolytic cell that is connected to the water supply system and which guides a part of the water flow in the water supply system to the electrolytic cell, and a discharge pipe for the electrolytic cell that is connected to the water supply system downstream of the location where the supply pipe for the electrolytic cell is connected to the water supply system and which discharges the water treated in the electrolytic cell to the water supply system. The device may further comprise a salt dosing device containing a compound capable of supplying chloride ions, a supply pipe for the salt dosing device which is connected to the supply pipe for the electrolytic cell and which supplies at least a part of the water in the supply pipe for the electrolytic cell to the salt dosing device for supplying chloride ions to the water to be treated in the electrolytic cell and a discharge pipe for the salt dosing device which is connected to the supply pipe for the electrolytic cell downstream of the location where the supply pipe for the salt dosing device is connected and which guides the water containing chloride ions from the salt dosing device to the supply pipe for the electrolytic cell. The device may also contain means for regulating the ratios of the water flow in the water supply system, the feeding for the electrolytic cell and the feeding for the salt dosing device, which may comprises constrictions and/or regulating valves accommodated in the water supply system between the location where the supply pipe for the electrolytic cell is connected to the water supply system and the location where the discharge pipe for the electrolytic cell is connected to the water supply system, the supply pipe for the electrolytic cell, the discharge pipe for the electrolytic cell, the supply pipe for the salt dosing device and/or the discharge pipe for the salt dosing device, and/or the blade wheel of the generator being accommodated in the water supply system downstream of the location where the supply pipe for the electrolytic cell is connected to the water supply system and upstream of the location where the discharge pipe of the electrolytic cell is connected to the water supply system.

The present invention is in particular suitable for disinfecting water in water supply systems that transport water that is not heated at a sufficient temperature. A particular risk of such systems is formed by Legionella. Legionella is a bacteria that can cause an infection of the airways called legionellosis, or Legionnaires' disease. Legionella bacteria grow in water with a temperature between 20 and 50 degrees Celsius, and in stagnant water. Heat pump based heating systems, which have recently gained increased interest in view of the ongoing energy transition, operate to heat water in these temperature ranges, but in general do not heat water above these temperatures. Therefore, heat pump based heating systems in general do not provide a sufficient heat to prevent Legionella growth. The present invention allows disinfection of water in water supply systems that involve heat pump based heating without the need for additional external energy input. In this respect the method according to the invention is in particular suitable for preventing Legionella in water supply systems in which the maximal water temperature is not sufficient for preventing Legionella growth, such as water supply systems comprising a heat pump based heating system. In view of this, the invention also relates to a water supply system comprising the electrolytic device according to the invention, which preferably comprises a heat pump based heating system. Implementation of the present invention in a water supply system that comprises a heat pump based heating system saves considerable energy and costs when compared to other disinfection approaches, such as heat treatment using boilers, buffer tanks with heat boosters or exposing the water to UV-C light.

### Exemplary embodiment

The exemplary embodiment below is meant to illustrate the invention and not to limit the scope of the claims.

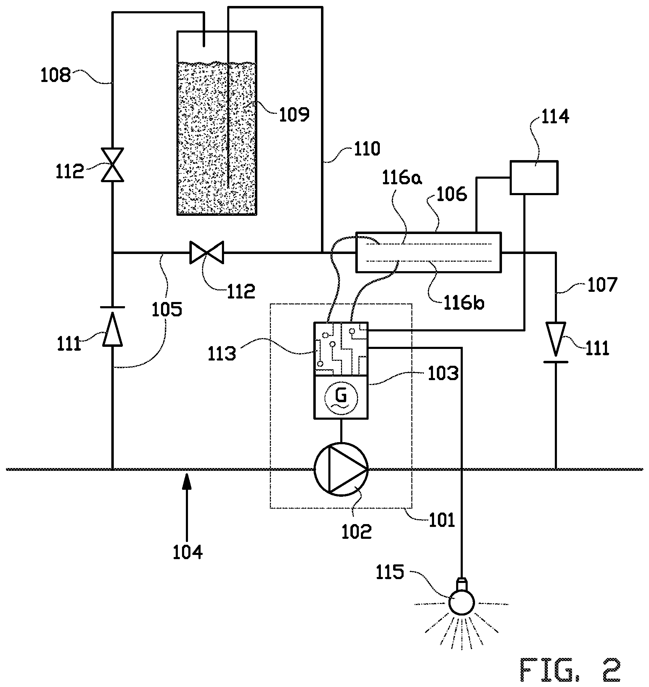

In the attached Fig. 2 an electrolytic device according to a preferred embodiment of the present invention is schematically shown. In Fig. 2 an AC generator 101 is shown consisting of a AC dynamo 103, a blade wheel 102 and a PCB 113. The blade wheel 102 is placed in the main pipe 104 to allow streaming water to drive the dynamo 103. A supply pipe 105 for an electrolytic cell 106 is branched off from the main pipe 104 upstream of the AC generator 1 and guides a part of the water to the electrolytic cell 106. The AC dynamo 103 uses water streaming through the main pipe 104 to generate AC with an AC frequency proportional to the flow rate of the water in the water supply system using said blade wheel 102. The PCB 113 converts the generated AC to direct current (DC) for applying said voltage over the electrodes 116 a, b of the electrolytic cell 106 using a converter implemented on said PCB 113. The converter is controlled to supply the DC for generating the required voltage difference for electrolytic generation of active chlorine on the basis of said AC frequency. A discharge pipe 107 for the electrolytic cell 106 guides the water treated in the electrolytic cell 106 back to the main pipe 104. In the device of Fig.2 also a salt dosing device 109 is provided. A supply pipe 108 for the salt dosing device 109 branches off a part of the flow through the supply pipe 105 for the electrolytic cell 106 and guides it to the salt dosing device 109 wherein a saturated sodium chloride solution and solid sodium chloride are present, and wherein salt is taken up in the water. A discharge pipe 110 for the salt dosing device 109 guides the salt containing water back to the supply pipe 105 for the electrolytic cell 106. Numbers 111 and 112 refer to non-return valves and constrictions, respectively. When the generator 101 does not function sufficiently, or when no or insufficient salt is supplied to the water the current to the electrodes 116a,b will strongly drop and the voltage increases. This can be detected via a detector 114 which on its turn submits a signal to a PCB 113 which for instance is able to actuate an alarm light 115 on the system.

For an exemplary electrolysis cell 106 using electrodes with a surface of 10 cm² the controller in the PCB can be programmed to deliver the desired current and voltage for the production of 0,3 mg/l active chlorine using a correlation based on the values as shown in the table below.

| Flow (l/min) | AC frequency (Hz) | Required current I (mA) | Required cell voltage U_{cell} (V) | Required power P (mW) |
|---|---|---|---|---|
| 3 | 313 | 54 | 2.25 | 122 |
| 4 | 581 | 72 | 2.30 | 166 |
| 5 | 990 | 90 | 2.40 | 216 |
| 6 | 1284 | 108 | 2.48 | 277 |
| 7 | 1310 | 126 | 2,56 | 307 |
| 8 | 1333 | 144 | 2,65 | 374 |
| 9 | 1360 | 162 | 2,71 | 439 |
| 10 | 1382 | 180 | 2,80 | 504 |

## Claims

1. A method for disinfecting water in a water supply system by means of generation of active chlorine using an electrolytic device comprising an electrolytic cell (106) provided with electrodes (116 a, b) over which a voltage difference is applied, wherein the method comprises:
supplying said voltage difference for said electrolytic cell (106) using an alternating current (AC) generator (101), wherein said AC generator (101) uses water streaming through the water supply system to generate alternating current with an alternating current frequency proportional to the flow rate of the water in the water supply system; and
converting the generated alternating current to direct current (DC) using a converter, as to generate a direct current and said voltage difference over said electrodes (116 a, b), wherein said converter is controlled to supply the required voltage difference and direct current for electrolytic generation of active chlorine on the basis on said AC frequency, wherein controlling said converter to supply the direct current for generating the required voltage difference for electrolytic generation of active chlorine on the basis of said AC frequency comprises
predetermining a correlation of flow rates with respective generated AC frequencies;
predetermining a correlation of said AC frequencies with respective direct current and voltage difference values required for electrolytic generation of active chlorine; and
using these correlations to control said converter such that the required voltage difference and direct current for electrolytic generation of active chlorine is applied in the electrolytic cell (106).

2. The method according to claim 1, further comprising:
determining the actual voltage difference over said electrodes (116 a, b) and monitoring whether said actual voltage difference is in line with the expected voltage difference on the basis of the predetermined correlation of said AC frequencies to respective direct current and voltage difference values; wherein a warning signal is generated when said actual voltage difference is not in line with the expected voltage difference.

3. The method according to any of the previous claims, wherein said water supply system comprises a heat pump based heating system.

4. An electrolytic device for disinfecting water in a water supply system by means of generation of active chlorine, comprising:
an electrolytic cell (106) provided with electrodes (116 a, b) over which a voltage difference can be applied;
an alternating current (AC) generator (101), configured to use water streaming through the water supply system to generate alternating current with an alternating current frequency proportional to the flow rate of the water in the water supply system;
a converter configured to convert the generated alternating current to direct current (DC) for applying said voltage difference over the electrodes (116 a, b) of the electrolytic cell (106); and
a control device configured to control said converter to supply the DC for generating the required voltage difference for electrolytic generation of active chlorine on the basis of said alternating current frequency, wherein said control device is programmed to
use a predetermined correlation between alternating current frequencies generated by said AC generator (101) with respective direct current and voltage difference values required for electrolytic generation of active chlorine to control said converter such that the required voltage difference for electrolytic generation of active chlorine is applied over said electrodes (116 a, b).

5. The electrolytic device according to claim 4, wherein said converter and said control device are comprised in a Printed Circuit Board (PCB) (113).

6. The electrolytic device according to any of the claims 4 to 5, wherein said AC generator (101) comprises a blade wheel (102) driven by the water in the water supply system.

7. The electrolytic device according to any of the claims 4 to 6, further comprising
a voltage meter configured for determining the actual voltage difference over said electrodes (116 a, b);
a monitoring device for monitoring whether said actual voltage difference is in line with the expected voltage difference on the basis of the predetermined correlation of said alternating current frequencies to respective direct current and voltage difference values; and
a warning device configured to generate a warning signal based on input from said monitoring device when said actual voltage difference is not in line with the expected voltage difference.

8. The electrolytic device according to claim 7, wherein the warning device comprises a LED indicator configured to generate a warning signal.

9. A water supply system comprising the electrolytic device according to any of the claims 4 to 8.

10. The water supply system according to claim 9, which comprises a heat pump based heating system.

11. Method according to any of the claims 1 to 3, , wherein the water supply system is configured to supply tap water.

12. Electrolytic device according to any of the claims 4 to 8, wherein the water supply system is configured to supply tap water.

13. Water supply system according to claim 9 or 10, wherein the water supply system is configured to supply tap water.

14. Use of the electrolytic device according to any of the claims 4 to 8, for preventing Legionella in water supply systems in which the maximal water temperature is not sufficient for preventing Legionella growth.

## Patentansprüche

1. Verfahren zum Desinfizieren von Wasser in einem Wasserversorgungssystem durch Erzeugung von aktivem Chlor unter Verwendung einer Elektrolysevorrichtung, die eine Elektrolysezelle (106) umfasst, die mit Elektroden (116 a, b) versehen ist, an die eine Spannungsdifferenz angelegt wird, wobei das Verfahren umfasst:
Anlegen der Spannungsdifferenz an die Elektrolysezelle (106) unter Verwendung eines Wechselstromgenerators (101), wobei der Wechselstromgenerator (101) durch das Wasserversorgungssystem strömendes Wasser verwendet, um Wechselstrom mit einer Wechselstromfrequenz zu erzeugen, die proportional zur Durchflussrate des Wassers im Wasserversorgungssystem ist; und
Umwandeln des erzeugten Wechselstroms in Gleichstrom (DC) unter Verwendung eines Konverters, um einen Gleichstrom und die genannte Spannungsdifferenz über den genannten Elektroden zu erzeugen (116 a, b), wobei der Konverter so gesteuert wird, dass er die erforderliche Spannungsdifferenz und den erforderlichen Gleichstrom für die elektrolytische Erzeugung von aktivem Chlor auf der Grundlage der Wechselstromfrequenz liefert, wobei die Steuerung des Konverters zur Lieferung des Gleichstroms zur Erzeugung der erforderlichen Spannungsdifferenz für die elektrolytische Erzeugung von aktivem Chlor auf der Grundlage der Wechselstromfrequenz Folgendes umfasst:
Bestimmen einer Korrelation von Durchflussraten mit den jeweiligen erzeugten Wechselstromfrequenzen;
Bestimmen einer Korrelation der Wechselstromfrequenzen mit den jeweiligen Gleichstrom- und Spannungsdifferenzwerten, die für die elektrolytische Erzeugung von aktivem Chlor erforderlich sind; und
Verwenden dieser Korrelationen, um den Konverter so zu steuern, dass die erforderliche Spannungsdifferenz und der erforderliche Gleichstrom für die elektrolytische Erzeugung von aktivem Chlor in der Elektrolysezelle (106) angelegt werden.

2. Verfahren, nach Anspruch 1, das ferner umfasst:
Bestimmen der tatsächlichen Spannungsdifferenz über den Elektroden (116 a, b) und Überwachen, ob die tatsächliche Spannungsdifferenz mit der erwarteten Spannungsdifferenz auf der Grundlage der vorbestimmten Korrelation der Wechselstromfrequenzen mit den jeweiligen Gleichstrom- und Spannungsdifferenzwerten übereinstimmt; wobei ein Warnsignal erzeugt wird, wenn die tatsächliche Spannungsdifferenz nicht mit der erwarteten Spannungsdifferenz übereinstimmt.

3. Verfahren, nach einem der vorstehenden Ansprüche, wobei das Wasserversorgungssystem ein Wärmepumpen-basiertes Heizsystem umfasst.

4. Elektrolysevorrichtung zur Desinfektion von Wasser in einem Wasserversorgungssystem durch Erzeugung von aktivem Chlor, umfassend:
eine Elektrolysezelle (106) mit Elektroden (116 a, b), an die eine Spannungsdifferenz angelegt werden kann;
einen Wechselstromgenerator (101), der so konfiguriert ist, dass er das durch das Wasserversorgungssystem strömende Wasser nutzt, um Wechselstrom mit einer Wechselstromfrequenz zu erzeugen, die proportional zur Durchflussrate des Wassers im Wasserversorgungssystem ist;
einen Konverter, der so konfiguriert ist, dass er den erzeugten Wechselstrom in Gleichstrom umwandelt, um die genannte Spannungsdifferenz über die Elektroden (116 a, b) der Elektrolysezelle (106) anzulegen; und
eine Steuervorrichtung, die so konfiguriert ist, dass sie den Konverter so steuert, dass er den Gleichstrom zur Erzeugung der erforderlichen Spannungsdifferenz für die elektrolytische Erzeugung von aktivem Chlor auf der Grundlage der Wechselstromfrequenz liefert, wobei die Steuervorrichtung so programmiert ist,
dass sie eine vorbestimmte Korrelation zwischen den vom Wechselstromgenerator (101) erzeugten Wechselstromfrequenzen mit den jeweiligen für die elektrolytische Erzeugung von aktivem Chlor erforderlichen Gleichstrom- und Spannungsdifferenzwerten zu verwenden, um den Konverter so zu steuern, dass die erforderliche Spannungsdifferenz für die elektrolytische Erzeugung von aktivem Chlor an die Elektroden (116 a, b) angelegt wird.

5. Elektrolysevorrichtung, nach Anspruch 4, wobei der Konverter und die Steuervorrichtung in einer Leiterplatte (PCB) (113) enthalten sind.

6. Elektrolysevorrichtung, nach Anspruch 4 oder Anspruch 5, wobei der Wechselstromgenerator (101) ein Flügelrad (102) umfasst, das durch das Wasser im Wasserversorgungssystem angetrieben wird.

7. Elektrolysevorrichtung, nach einem der Ansprüche 4 bis 6, die ferner umfasst:
ein Spannungsmessgerät, das zum Bestimmen der tatsächlichen Spannungsdifferenz über den Elektroden (116 a, b) konfiguriert ist;
eine Überwachungsvorrichtung zum Überwachen, ob die tatsächliche Spannungsdifferenz mit der erwarteten Spannungsdifferenz auf der Grundlage der vorbestimmten Korrelation der Wechselstromfrequenzen mit den jeweiligen Gleichstrom- und Spannungsdifferenzwerten übereinstimmt; und
eine Warnvorrichtung, die so konfiguriert ist, dass sie auf der Grundlage der Eingabe von der Überwachungsvorrichtung ein Warnsignal erzeugt, wenn die tatsächliche Spannungsdifferenz nicht mit der erwarteten Spannungsdifferenz übereinstimmt.

8. Elektrolysevorrichtung, nach Anspruch 7, wobei die Warneinrichtung eine LED-Anzeige umfasst, die so konfiguriert ist, dass sie ein Warnsignal erzeugt.

9. Wasserversorgungssystem, das die Elektrolysevorrichtung gemäß einem der Ansprüche 4 bis 8 umfasst.

10. Wasserversorgungssystem, nach Anspruch 9, das ein Wärmepumpen-basiertes Heizsystem umfasst.

11. Verfahren, nach einem der Ansprüche 1 bis 3, wobei das Wasserversorgungssystem so konfiguriert ist, dass es Leitungswasser liefert.

12. Elektrolysevorrichtung, nach einem der Ansprüche 4 bis 8, wobei das Wasserversorgungssystem so konfiguriert ist, dass es Leitungswasser liefert.

13. Wasserversorgungssystem, nach Anspruch 9 oder 10, wobei das Wasserversorgungssystem so konfiguriert ist, dass es Leitungswasser liefert.

14. Verwendung der Elektrolysevorrichtung gemäß einem der Ansprüche 4 bis 8 zur Verhinderung von Legionellen in Wasserversorgungssystemen, in denen die maximale Wassertemperatur nicht ausreicht, um das Wachstum von Legionellen zu verhindern.

## Revendications

1. - Procédé pour désinfecter l'eau dans un réseau d'alimentation en eau par génération de chlore actif à l'aide d'un dispositif d'électrolyse comprenant une cellule d'électrolyse (106) munie d'électrodes (116 a, b) sur lesquelles une différence de tension est appliquée, dans lequel le procédé comprend :
la fourniture de ladite différence de tension pour ladite cellule d'électrolyse (106) à l'aide d'un générateur de courant alternatif (CA) (101), dans lequel ledit générateur CA (101) utilise le ruissellement des eaux traversant le réseau d'alimentation en eau pour générer un courant alternatif ayant une fréquence du courant alternatif proportionnelle au débit de l'eau dans le réseau d'alimentation en eau ; et
la conversion du courant alternatif généré en courant continu (CC) à l'aide d'un convertisseur, afin de générer un courant continu et ladite différence de tension sur lesdites électrodes (116 a, b), dans lequel ledit convertisseur est commandé pour fournir la différence de tension et le courant continu requis pour la génération électrolytique de chlore actif sur la base de ladite fréquence CA, dans lequel la commande dudit convertisseur pour fournir le courant continu pour générer la différence de tension requise pour la génération électrolytique de chlore actif sur la base de ladite fréquence CA comprend
la prédétermination d'une corrélation des débits avec les fréquences CA générées respectives ;
la prédétermination d'une corrélation desdites fréquences CA avec les valeurs respectives de courant continu et de différence de tension requises pour la génération électrolytique de chlore actif ; et
l'utilisation de ces corrélations pour commander ledit convertisseur de telle sorte que la différence de tension et le courant continu requis pour la génération électrolytique de chlore actif sont appliqués dans la cellule d'électrolyse (106).

2. - Procédé selon la revendication 1, comprenant en outre :
la détermination de la différence de tension réelle sur lesdites électrodes (116 a, b) et la surveillance de l'éventualité selon laquelle ladite différence de tension réelle est conforme à la différence de tension prévue sur la base de la corrélation prédéterminée desdites fréquences CA avec les valeurs respectives de courant continu et de différence de tension ; dans lequel un signal d'avertissement est généré lorsque ladite différence de tension réelle n'est pas conforme à la différence de tension prévue.

3. - Procédé selon l'une quelconque des revendications précédentes, dans lequel ledit réseau d'alimentation en eau comprend un système de chauffage par pompe à chaleur.

4. - Dispositif d'électrolyse pour désinfecter l'eau dans un réseau d'alimentation en eau par génération de chlore actif ; comprenant :
une cellule d'électrolyse (106) munie d'électrodes (116 a, b) sur lesquelles une différence de tension peut être appliquée ;
un générateur de courant alternatif (CA) (101), configuré pour utiliser le ruissellement des eaux traversant le réseau d'alimentation en eau pour générer un courant alternatif ayant une fréquence du courant alternatif proportionnelle au débit de l'eau dans le réseau d'alimentation en eau ;
un convertisseur configuré pour convertir le courant alternatif généré en courant continu (CC) pour appliquer ladite différence de tension sur les électrodes (116 a, b) de la cellule d'électrolyse (106) ; et
un dispositif de commande configuré pour commander audit convertisseur de fournir le CC pour générer la différence de tension requise pour la génération électrolytique de chlore actif sur la base de ladite fréquence du courant alternatif, dans lequel ledit dispositif de commande est programmé pour
utiliser une corrélation prédéterminée entre les fréquences du courant alternatif générées par ledit générateur CA (101) avec les valeurs respectives de courant continu et de différence de tension requises pour la génération électrolytique de chlore actif pour commander ledit convertisseur de telle sorte que la différence de tension requise pour la génération électrolytique de chlore actif est appliquée sur lesdites électrodes (116 a, b).

5. - Dispositif d'électrolyse selon la revendication 4, dans lequel ledit convertisseur et ledit dispositif de commande sont compris dans une carte de circuit imprimé (CCI) (113).

6. - Dispositif d'électrolyse selon l'une quelconque des revendications 4 à 5, dans lequel ledit générateur CA (101) comprend une roue à aubes (102) entraînée par l'eau dans le réseau d'alimentation en eau.

7. - Dispositif d'électrolyse selon l'une quelconque des revendications 4 à 6, comprenant en outre
un voltmètre configuré pour déterminer la différence de tension réelle sur lesdites électrodes (116 a, b) ;
un dispositif de surveillance pour surveiller l'éventualité selon laquelle ladite différence de tension réelle est conforme à la différence de tension prévue sur la base de la corrélation prédéterminée desdites fréquences du courant alternatif avec les valeurs respectives de courant continu et de différence de tension ; et
un dispositif d'avertissement configuré pour générer un signal d'avertissement sur la base des données d'entrée dudit dispositif de surveillance lorsque ladite différence de tension réelle n'est pas conforme à la différence de tension prévue.

8. - Dispositif d'électrolyse selon la revendication 7, dans lequel le dispositif d'avertissement comprend un voyant LED configuré pour générer un signal d'avertissement.

9. - Réseau d'alimentation en eau comprenant le dispositif d'électrolyse selon l'une quelconque des revendications 4 à 8.

10. - Réseau d'alimentation en eau selon la revendication 9, qui comprend un système de chauffage par pompe à chaleur.

11. - Procédé selon l'une quelconque des revendications 1 à 3, dans lequel le réseau d'alimentation en eau est configuré pour fournir de l'eau du robinet.

12. - Dispositif d'électrolyse selon l'une quelconque des revendications 4 à 8, dans lequel le réseau d'alimentation en eau est configuré pour fournir de l'eau du robinet.

13. - Réseau d'alimentation en eau selon la revendication 9 ou 10, dans lequel le réseau d'alimentation en eau est configuré pour fournir de l'eau du robinet.

14. - Utilisation du dispositif d'électrolyse selon l'une quelconque des revendications 4 à 8, pour prévenir les légionnelles dans les réseaux d'alimentation en eau dans lesquels la température maximale de l'eau n'est pas suffisante pour prévenir la prolifération des légionnelles.
